Europäisches Patentamt

European Patent Office

Office européen des brevets

(11) Veröffentlichungsnummer: **0 041 583**
**B1**

# (12) EUROPÄISCHE PATENTSCHRIFT

(45) Veröffentlichungstag der Patentschrift:
**18.07.84**

(21) Anmeldenummer: **80105176.4**

(22) Anmeldetag: **30.08.80**

(51) Int. Cl.³: **H 02 G 3/08, H 02 K 5/22**

(54) **Anschlusskasten ohne Kabelstutzen für elektrische Maschinen.**

(30) Priorität: **10.06.80 DE 3021720**

(43) Veröffentlichungstag der Anmeldung:
**16.12.81 Patentblatt 81/50**

(45) Bekanntmachung des Hinweises auf die Patenterteilung:
**18.07.84 Patentblatt 84/29**

(84) Benannte Vertragsstaaten:
**BE DE FR GB IT SE**

(56) Entgegenhaltungen:
**DE - A - 1 665 081**
**DE - A - 1 765 396**
**DE - B - 1 099 034**
**DE - C - 685 793**
**FR - A - 1 115 676**
**GB - A - 317 201**
**US - A - 2 715 152**
**US - A - 3 168 613**
**US - A - 3 434 618**
**US - A - 3 542 237**

(73) Patentinhaber: **Schorch GmbH, Breitestrasse 131,
D-4050 Mönchengladbach 2 (DE)**

(72) Erfinder: **Paulussen, Helmut, Kelzenbergerweg 37,
D-4050 Mönchengladbach 3 (DE)**

(74) Vertreter: **Patentanwaltsbüro Cohausz & Florack,
Postfach 14 01 47, D-4000 Düsseldorf 1 (DE)**

## Beschreibung

Die Erfindung betrifft einen Anschlußkasten für elektrische Maschinen, bestehend aus zwei schalenförmigen Kastenhälften, von denen die eine die Anschlußelemente, wie Klemmen, für die Verbindung der Wicklungsenden mit den Netzanschlußleitungen, enthält, und die Dichtfläche der einen Kastenhälfte eben ist und die der anderen eine umlaufende Nut mit darin eingelegter Dichtschnur aufweist sowie aus einem senkrecht zur Teilungsebene des Kastens stehenden, die Kabel-Durchführungen enthaltenden Deckel, der gegenüber dem Kasten abgedichtet, die Kastenöffnung überdeckend, an dem Kasten angeschraubt ist.

Es ist üblich, an elektrischen Maschinen, z. B. Motoren oder Generatoren, Anschlußkästen anzuordnen, die in der Regel am Statorgehäuse angebracht sind. Diese Anschlußkästen enthalten Klemmen oder ähnliche Anschlußelemente für die Verbindung der Wicklungsenden mit den Netzanschlußleitungen. Nach den Schutzartvorschriften für elektrische Maschinen (IEC 34—5, DIN 40050) müssen derartige Anschlußkästen weitestgehend gegen Eindringen von Wasser, Staub usw. abgedichtet sein. Es ist z. B. aus der gattungsbildenden DE-A-1 665 081 bekannt, die durch die Verbindungs- bzw. Dichtungsflächen entstehenden Teilungsfugen mehrteilig ausgeführter Anschlußkästen entweder mit elastischen Materialien (Flachgummi, Profilgummi, einvulkanisiertem Dichtungsmaterial usw.) abzudichten. Die die Fugen bildenden Flächen können aber auch so genau bearbeitet werden, daß hierdurch allein eine ausreichende Abdichtung beim Schließen des Kastens erzielt werden kann (US-PS 3 434 618).

Bei dem aus der DE-A-1 763 396 bekannten Anschlußkasten liegt die Dichtung in einer Umfangsnut des an das Gehäuse angeschraubten Deckels. Sie überlappt die zwischen oberer und unterer Gehäuseschale gelegte flächige Dichtung. Diese bekannte Lösung hat den Nachteil, daß die Anlagefläche der Dichtung am Deckel und die an der Gehäuseinnenfläche für einen paßgenauen Sitz bearbeitet sein muß. Ferner ist die Montage des Deckels dadurch erschwert, daß sich die beim Einsetzen des Deckels aufeinandergleitenden Dichtungen verschieben können, wodurch eine sichere Abdichtung nicht gewährleistet ist. Bei häufiger Deckelmontage und -demontage scheuern sich die Dichtungen an ihrem Überlappungsbereich ab, woraus die Notwendigkeit zu einem öfteren Wechsel der Dichtungen erwächst. Diese bekannte Lösung konnte daher nicht befriedigen.

Es handelt sich hier um einen Anschlußkasten mit ein- oder angeschraubtem Kabeleinführungselement, wobei das Kabeleinführungselement, z. B. PG-Verschraubung, in bzw. an den eine Gehäusewand des Anschlußkastens bildenden Deckel geschraubt wird. Das Kabeleinführungselement ist so ausgebildet, daß es die Abdichtung des Kabels bzw. der Netzanschlußleitung übernehmen kann. An solche Anschlußkästen wird darüber hinaus die Forderung gestellt, daß sich — besonders bei elektrischen Maschinen mittlerer und höherer Leistung — die Netzanschlußleitung nach Lösen der Anschlußverbindungen leicht aus dem Anschlußkasten entfernen lassen müssen. Es soll auf jeden Fall verhindert werden, daß Anschlußleitungen größeren Querschnitts aus Öffnungen, Bohrungen usw. zurückgezogen werden müssen.

Durch die Forderung nach anwendungsfreundlicher Montage und Demontage der Anschlußleitungen entstehen Probleme hinsichtlich der Abdichtung. Bei Anordnung eines vom Anschlußkasten lösbaren, eine Seite des Anschlußkastens bildenden separaten Deckels entstehen zu den Dichtungsfugen zwischen den Kastenhälften senkrecht verlaufende Dichtungsfugen zwischen dem Deckel und den Kastenhälften des Anschlußkastens. Dabei kreuzen sich die Dichtungsebenen. An diesen Kreuzungs- oder Berührungspunkten ergeben sich durch Fertigungsungenauigkeiten und -toleranzen Abdichtungsprobleme. Diese gewährleisten bei den bisher bekannten Anschlußkästen keine sichere Abdichtung, es sei denn, daß zusätzlich zu den elastischen Dichtungen Hilfsmittel wie Kleber, Pasten, Kitt usw. aufgetragen werden, oder aber die genannten Dichtungsflächen werden bearbeitet. Das erstere verlangt vom Anwender neben handwerklicher Fertigkeit und sorgfältiger Anwendung auch noch Einsicht in die technische Notwendigkeit, das letztere ist außerordentlich fertigungsaufwendig. In der Regel verlieren diese Maßnahme ihre Wirkung bereits nach einmaliger Montage bzw. Demontage.

Aufgabe der vorliegenden Erfindung ist die Schaffung eines problemlos abdichtbaren Anschlußkastens ohne Kabelstutzen, der folgenden Bedingungen gerecht wird:

— die verwendeten Dichtungselemente sollen einfach zu montieren sein,
— die Dichtungen sollen bei mehrfacher Montage und Demontage voll funktionsfähig bleiben,
— die Teilungsfugen der Anschlußkästen sollen unbearbeitet bleiben,
— die Dichtungen sollen unter Vermeidung von Klebevorgängen unverlierbar angebracht sein,
— das Dichtungssystem soll bei Auftreten der möglichen Fertigungstoleranzen und bei Überflutung der Anschlußkästen absolute Dichtheit garantieren,
— das Dichtungssystem soll unabhängig von der Reihenfolge der Anschraubvorgänge beim Schließen des Anschlußkastens einwandfreie Abdichtung garantieren.

Zur Lösung dieser Aufgabe wird ein Anschlußkasten der eingangs genannten Art mit den im Anspruch 1 angegebenen Merkmalen vorgeschlagen.

Der Anschlußkasten besteht aus drei Teilen, zwei Kastenhälften und einem Deckel, an dem die Durchführungen für die Kabel angebracht sind. Der Deckel bildet eine Seite des Kastengehäuses und kann wahlweise zunächst an einer Schalenhälfte oder aber nach Zusammenfügen beider Schalenhälften angeschraubt werden.

Die senkrecht zueinander verlaufenden und sich kreuzenden Dichtungsebenen werden mit Profildichtungen abgedichtet. In der Teilungsebene zwischen den Schalenhälften, die gleich oder unterschiedlich groß sein können, wird vorzugsweise ein hochelastisches Porengummi oder Zellgummi mit geschlossener Außenhaut verwendet, das etwa bis zur Hälfte der Profilhöhe in einer vorgegossenen Nut in der Verbindungsfläche der einen Kastenhälfte gut haftend fixiert wird. Die Nutdimensionierung ist so mit der Profildichtungsabmessung abgestimmt, daß Überbeanspruchungen der Dichtung und damit verbundene Elastizitätseinbußen nicht entstehen können.

In der dazu senkrechten Dichtungsebene zwischen den Kastenhälften und dem Deckel kann ein Rundschnurring oder O-Ring bekannter Ausführung verwendet werden, der durch Vorspannung in der vorgegebenen Nut fixiert ist. Durch Führung der Dichtungen in eingegossenen Nuten ist es möglich, die Dichtungen exakt an die Berührungspunkte zwischen den senkrecht zueinanderstehenden Dichtungsebenen heranzuführen und darüber hinaus bestimmbare Überstände der Dichtungsprofile über die Gußkanten zu erreichen. Die Überstände sind so ausgelegt, daß die zu erwartenden Fertigungstoleranzen oder -ungenauigkeiten sicher beherrscht werden können und keine Abdichtungsschwierigkeiten bereiten.

Die Berührungspunkte zwischen den beiden Dichtungen wurden an eine um 30 bis 60°, vorzugsweise 45° abgeschrägte Ebene gelegt, damit die Reihenfolge der Anschraubvorgänge die Dichtwirkung nicht beeinflußt, d. h., es entsteht hierdurch unabhängig von der gewählten Reihenfolge der Montageschritte ausreichende Pressung der Dichtungen und der Berührungsflächen der Dichtungen untereinander.

Anhand des in der Zeichnung dargestellten Ausführungsbeispiels wird die Erfindung näher erläutert. Es zeigt

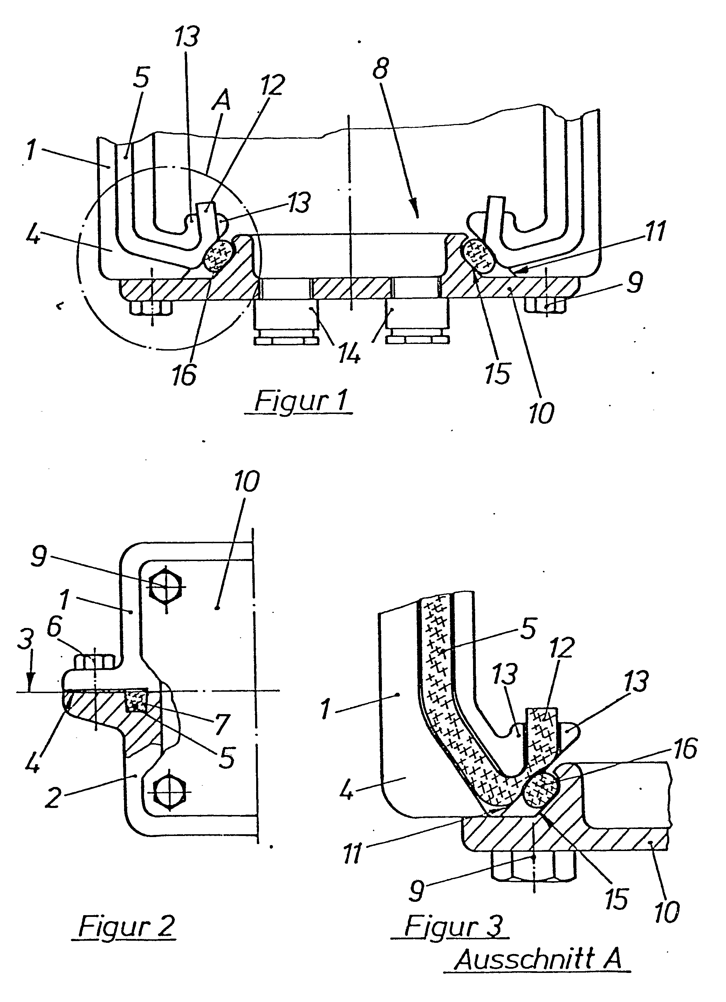

Fig. 1 einen Teilschnitt durch den Deckel in Dichtungsebene der beiden Schalenhälften,

Fig. 2 eine Sicht auf den Deckel mit einem Teilschnitt der Dichtungsebene der beiden Schalenhälften,

Fig. 3 den Ausschnitt A aus Fig. 1 in vergrößertem Maßstab.

Der Anschlußkasten besteht aus den Schalenhälften 1 und 2, die entlang ihrer Teilungsebene 3 unter Einlegen einer der Dichtungs- oder Verbindungsflächen 4 folgenden Dichtung 5 durch Schrauben 6 lösbar miteinander verbunden werden können. Die Dichtschnur 5 ist zweckmäßigerweise in eine zum Nutgrund konisch sich verjüngende Nut 7 in der Dichtfläche 4 einer Schalenhälfte 2 des Anschlußkastens so eingesetzt, daß sie die Dichtfläche überragt, so daß es mit der ebenen Dichtfläche der anderen Schalenhälfte 1 beim Anziehen der Schrauben 6 durch begrenzte Zusammenpressung der Dichtung 5 zu einer Abdichtung zwischen den Schalenhälften 1, 2 kommt.

In einer Ebene senkrecht zur Teilungsebene 3 der Schalenhälften 1, 2 befindet sich eine Öffnung 8 im Anschlußkasten, die durch einen mittels Schrauben 9 an die Schalenhälften 1, 2 anschraubbaren Deckel 10 verschließbar ist.

An den der Öffnung 8 zugewandten, zum Kasteninneren konisch sich verjüngend unter 30 bis 60°, vorzugsweise 45°, abgeschrägten Dichtfläche 11 der Schalenhälften 1, 2 sind die Enden 12 der Dichtschnur so abgewinkelt, daß sie etwas über die Dichtfläche 11 vorstehen. Die Enden 12 der Dichtschnur 5 werden dabei zwischen Distanznocken 13 an der Dichtfläche 4 der Schalenhälften 1, 2 eingeklemmt.

Der die Kabeldurchführungen 14 enthaltende Deckel 10 hat ebenfalls eine abgeschrägte Dichtfläche 15. Zwischen die Dichtflächen 11, 15 der Schalenhälften 1, 2 bzw. des Deckels 10 ist eine Dichtung 16 eingelegt, die mit den abgewinkelten über die Dichtfläche 11 der Schalenhälften 1, 2 überstehenden Enden 12 der Dichtschnur 5 in Berührung kommt. Bei voll angezogenen Schrauben 9 soll sich die Dichtung 16 und die abgewinkelten Enden 12 der Dichtschnur 5 zwischen den Dichtflächen 11, 15 begrenzt zusammenpressen. Dabei wird nicht nur die Dichtfuge zwischen dem Deckel 10 und den Schalenhälften 1, 2, sondern auch ein möglicher Spalt zwischen den Dichtflächen 4 der Schalenhälften 1, 2 im Bereich von deren Dichtflächen 11 abgedichtet.

Die schrägen Dichtflächen 11, 15 ermöglichen es, bei der Demontage wahlweise den Deckel 10 zuerst abzuschrauben oder aber eine der Schalenhälften 1, 2. Soll beispielsweise eine Prüfung der Anschlußklemmen im Anschlußkasten erfolgen, so braucht der Deckel 10 nicht demontiert, sondern nur die Schalenhälfte 1 abgeschraubt zu werden. Die schrägen Dichtflächen 11, 15 ermöglichen dann ein problemloses Abnehmen der Schalenhälfte 1 und ihre erneute Montage ohne Auftreten von Abdichtungsproblemen.

Die Nut zum Einlegen der Dichtschnur 5 kann an die Schalenhälfte 2 angegossen sein, so daß keine zusätzliche Bearbeitung am Anschlußkasten erforderlich ist. Sie ist zweckmäßigerweise konisch ausgebildet, und die Dichtschnur 5 unter einer gewissen Vorspannung eingelegt. Dadurch wird ein Herausrutschen der Dichtschnur 5 bei der Montage oder Demontage des Anschlußkastens verhindert. An sich kann die Dichtschnur 5 auch durch eine entsprechende Feinbearbeitung der Dichtflächen 4 zwischen den Anschlußkästen 1, 2 ersetzt werden, obwohl es sich dabei um eine fertigungstechnisch aufwendigere Lösung handelt. Diese Lösung soll aber vom Schutzumfang mit umfaßt werden.

## Patentansprüche

1. Anschlußkasten für elektrische Maschinen, bestehend aus zwei schalenförmigen Kastenhälften (1, 2), von denen die eine die Anschlußelemente, wie Klemmen, für die Verbindung der Wicklungsenden mit den Netzanschlußleitungen enthält, wobei die Dichtfläche (4) der einen Kastenhälfte (1) eben ist und die der anderen (2) eine umlaufende Nut (7) mit darin eingelegter Dichtschnur (5) aufweist sowie aus einem senkrecht zur Teilungsebene (3) des Kastens (1, 2) stehenden, die Kabel-Durchführungen (14) enthaltenden Deckel (10), der gegenüber dem Kasten (1, 2) abgedichtet, die Kastenöffnung (8) überdeckend, an dem Kasten (1, 2) angeschraubt ist, dadurch gekennzeichnet, daß die Dichtschnur (5) an der durch den Deckel (10) verschließbaren Öffnung (8) liegende, eingeklemmte, abgewinkelte Enden (12) besitzt, die mit ihrem konkaven über die Dichtfläche (11) der Kastenhälften (1, 2) zum Deckel (10) hinausragenden Bereich an einer zwischen die jeweils zum Kasteninneren hin konisch sich verjüngenden Dichtflächen (11, 15) am Kasten (1, 2) bzw. am Deckel (10) gelegten Ringdichtung (16) zur Anlage kommen.

2. Anschlußkasten nach Anspruch 1, dadurch gekennzeichnet, daß die schrägen Dichtflächen (11, 15) unter einem Winkel von 30 bis 60°, vorzugsweise 45°, zu den Wandebenen des Kastens verlaufen.

3. Anschlußkasten nach einem der Ansprüche 1 oder 2, dadurch gekennzeichnet, daß die Höhe des über die Dichtfläche (4) der anderen Kastenhälfte überstehenden Teils der Dichtschnur (5) so bemessen ist, daß bei voll angezogenen Schrauben (6) und direkter Berührung der Dichtflächen (4) der Kastenhälften (1, 2) die Dichtschnur (5) begrenzt zusammengepreßt ist.

4. Anschlußkasten nach einem der Ansprüche 1 bis 3, dadurch gekennzeichnet, daß die Dicke der Dichtung (16) so bemessen ist, daß bei voll angezogenen Schrauben (9) und direkter Berührung des Deckels (10) an der Außenseite der Kastenhälften (1, 2) die Dichtung (16) und die mit ihr in Kontakt stehenden Dichtungsenden (12) in begrenztem Umfang zusammengepreßt sind.

5. Anschlußkasten nach einem der Ansprüche 1 bis 4, dadurch gekennzeichnet, daß die Nut (7) zum Grund konisch sich verjüngende Seitenflächen besitzt, an denen die Dichtschnur selbsthaftend fixiert ist.

6. Anschlußkasten nach einem der Ansprüche 1 bis 5, dadurch gekennzeichnet, daß die schräge Dichtfläche (15) des Deckels (10) den Grund einer umlaufenden Nut bildet, in welche die Dichtung (16) unter Vorspannung eingelegt ist.

## Claims

1. A connexion box for electrical machines, comprising two shell-shaped casing halves (1, 2), one of which contains the connexion elements, such as terminals, for connecting the ends of windings to the supply mains, the sealing surface (4) of one casing half (1) being flat and that of the other (2) comprising a continuous groove (7) with a sealing strip (5) inserted therein, and a cover (10) which is disposed at right angles to the plane of division (3) of the box (1, 2) and contains the cable bushings (14) and which, sealed off from the box (1, 2) and covering the box opening (8), is screwed to the box (1, 2), characterized in that the sealing strip (5) comprises clamped-in, angled ends (12) which are situated on the opening (8) sealable by the cover (10) and whose concave region projecting beyond the sealing surface (11) of the casing halves (1, 2) towards the cover (10) comes to bear against an annular seal (16) interposed between the sealing surfaces (11, 15) on the box (1, 2) and on the cover (10) respectively, the said sealing surfaces (11, 15) tapering in a conical manner in each case towards the interior of the box.

2. A connexion box according to claim 1, characterized in that the oblique sealing surfaces (11, 15) extend at an angle of from 30 to 60°, preferably 45°, towards the wall surfaces of the box.

3. A connexion box according to one of claims 1 or 2, characterized in that the height of the part of the sealing strip (5) projecting beyond the sealing surface (4) of the other casing half is dimensioned such that with fully tightened screws (6) and direct contact of the sealing surfaces (4) of the halves (1, 2) of the box the sealing strip (5) is compressed to a limited extent.

4. A connexion box according to one of claims 1 to 3, characterized in that the thickness of the seal (16) is dimensioned such that with fully tightened screws (9) and direct contact of the cover (10) on the outside of the halves (1, 2) of the box the seal (16) and the ends (12) of the seal in contact therewith are compressed to a limited extent.

5. A connexion box according to one of claims 1 to 4, characterized in that the groove (7) comprises lateral surfaces which taper in a conical manner with respect to the base and to which the sealing strip is fixed in a self-adhesive manner.

6. A connexion box according to one of claims 1 to 5, characterized in that the oblique sealing surface (15) of the cover (10) forms the base of a continuous groove in which the seal (16) is inserted with prestressing.

## Revendications

1. Boîte de jonction pour machines électriques, constituée de deux demi-boîtes (1, 2) en forme de cuvettes dont l'une contient les éléments de connexion, tels que bornes, pour la liaison des fins d'enroulement avec les lignes de branchement du réseau électrique, la surface d'étanchéité (4) d'une des demi-boîtes (1) étant plane et celle de l'autre (2) présentant une rainure périphérique (7) dans laquelle est logé un cordon d'étanchéité (5), ainsi que d'un couvercle (10) monté orthogonal au plan de séparation (3) de la boîte (1, 2) et contenant les traversées de câbles (14), qui est rendu étanche par rapport à la boîte (1, 2), recouvrant l'ouverture de boîte (8), qui est vissé à la boîte (1, 2), caractérisé par le fait que le cordon d'étanchéité (5) possède des extrémités (12) repliées serrées adjacentes à l'ouverture (8) pouvant être fermée au moyen du couvercle (10), qui viennent en contact, par leur zone concave en saillie au-dessus de la surface d'étanchéité (11) des demi-boîtes (1, 2) vers le couvercle, avec une bague d'étanchéité (16) logée entre les surfaces d'étanchéité (11, 15) se rétrécissant respectivement coniquement vers l'intérieur de la boîte sur la boîte (1, 2) ou le couvercle (10).

2. Boîte des jonction selon la revendication 1, caractérisée par le fait que les surfaces d'étanchéité obliques (11, 15) s'étendent par rapport au plan de paroi de la boîte selon un angle de 30 à 60°, de préférence de 45°.

3. Boîte de jonction selon l'une des revendications 1 et 2, caractérisée par le fait que la hauteur de la partie du cordon d'étanchéité (5) dépassant au-dessus de la surface d'étanchéité (4) de l'autre demi-boîte an une valeur telle que, avec les vis (6) complètement serrées et contact direct de la surface d'étanchéité (4) des demi-boîtes (1, 2), le cordon d'étanchéité (5) est comprimé de manière limitée.

4. Boîte de jonction selon l'une des revendications 1 à 3, caractérisée par le fait que l'épaisseur du joint d'étanchéité (16) a une valeur telle que, avec les vis (9) complètement serrées et contact direct du couvercle (10) sur la face extérieure des demi-boîtes (1, 2), le joint d'étanchéité (16) et les extrémités d'étanchéité (12) se trouvant en contact avec lui sont comprimés ensemble sur un périmètre limité.

5. Boîte de jonction selon l'une des revendications 1 à 4, caractérisée par le fait que la rainure (7) présente des parois latérales diminuant coniquement vers le fond, auxquelles le cordon d'étanchéité est fixé auto-adhérent.

6. Boîte de jonction selon l'une des revendications 1 à 5, caractérisée par le fait que la surface d'étanchéité oblique (15) du couvercle (10) forme le fond d'une rainure périphérique dans laquelle est logé le joint d'étanchéité (16) sous précontrainte.

Figur 1

Figur 2

Figur 3
Ausschnitt A